# EUROPÄISCHE PATENTSCHRIFT

(11) **EP 3 032 052 B1**
(45) Veröffentlichungstag und Bekanntmachung des Hinweises auf die Patenterteilung: **21.06.2017**
(21) Anmeldenummer: 15190711.0
(22) Anmeldetag: 21.10.2015
(51) Int. Cl.: F01L 3/14, F01L 3/12, B23P 15/00, B21K 1/22

(54) **VORRICHTUNG FÜR DIE HERSTELLUNG ZUMINDEST EINES HOHLVENTILS**
DEVICE FOR MANUFACTURING AT LEAST ONE HOLLOW VALVE
DISPOSITIF POUR LA FABRICATION D'AU MOINS UNE SOUPAPE CREUSE

(30) Priorität: 11.12.2014 DE 102014225619
(43) Veröffentlichungstag der Anmeldung: 15.06.2016
(73) Patentinhaber: Mahle International GmbH, 70376 Stuttgart (DE)
(72) Erfinder: KROOS, Peter, 71277 Rutesheim (DE); LUVEN, Christoph, 70376 Stuttgart (DE)
(74) Vertreter: BRP Renaud & Partner mbB Rechtsanwälte Patentanwälte Steuerberater

(56) Entgegenhaltungen:
- CN-B- 101 927 355
- US-A- 2 411 734
- US-A- 2 577 644

## Beschreibung

Die vorliegende Erfindung betrifft eine Vorrichtung zur Herstellung zumindest eines Hohlventils für den Gasaustausch, insbesondere für Verbrennungsmotoren.

Hohlventile für Verbrennungsmotoren sind seit langem Stand der Technik und ermöglichen aufgrund der Kühlung eine längere Lebensdauer sowie eine verbesserte Leistung des Verbrennungsmotors. Neben einer reinen Wärmeableitung über einen Ventilsitzring in dem Zylinderkopf bieten derartige Hohlventile zusätzlich die Möglichkeit, in ihrem Hohlraum ein Kühlmedium, beispielsweise Natrium, aufzunehmen, wodurch insbesondere Vorteile beim Einsatz als Auslassventil erzielt werden können. Natrium schmilzt bei 97,5 Grad Celsius und ist darüber hinaus ein sehr guter Wärmeleiter, wobei das Natrium aufgrund der Betriebstemperatur des Verbrennungsmotors flüssig und dann durch die Massenkräfte im Schaft hin- und her bewegt wird. In diesem Zusammenhang spricht man auch von dem sogenannten "Shaker-Effekt". Das Kühlmittel, also vornehmlich das Natrium, transportiert dabei einen Teil der bei der Verbrennung anfallenden Wärme vom Ventilteller und insbesondere von einem hochbelasteten Hohlkehlenbereich in den Schaftbereich und kann von dort über die Ventilführung abgeführt werden. Durch mit Natrium gekühlte Hohlventile lassen sich die Temperaturen am Ventilteller um 80 °C bis 150 °C senken. Positiver Nebeneffekt dabei zusätzlich, dass ein derartiges Hohlventil trotz Natriumfüllung leichter ist als ein Ventil mit massivem Ventilschaft.

Neben der eigentlichen Bohrung im Ventilschaft sollte jedoch ein Hohlraum im Ventilteller größer sein, um insbesondere die hochbelasteten Bereiche des Ventiltellers (beispielsweise Hohlkehlenbereich) besser kühlen zu können. Hierzu wird üblicherweise das sogenannte ECM-Verfahren (Elektrochemisches Abtragen) verwendet, bei welchem eine Kathode in die Bohrung des Ventilschafts eingeführt und Elektronen über einen Elektrolyten an das als Anode fungierende Werkstück, hier das Hohlventil, aussendet.

Dokument US 2577644 A1 offenbart eine Vorrichtung für die Herstellung zumindest eines Hohlventils für den Gasaustausch, insbesondere für Verbrennungsmotoren. Nachteilig bei den bekannten Hohlventilen ist jedoch deren vergleichsweise aufwendige Herstellung, da zum Herstellen des im Ventilteller bzw. im Ventilkopf vorgesehenen Hohlraums ein äußerst präzises Führen und Positionieren der Kathode erforderlich ist.

Die vorliegende Erfindung beschäftigt sich daher mit dem Problem, eine Vorrichtung für die Herstellung zumindest eines Hohlventils für den Gasaustausch anzugeben, mittels welcher eine besonders präzise und zugleich wirtschaftliche Herstellung eines derartigen Hohlventils möglich ist.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine mehrteilige Vorrichtung für die Herstellung zumindest eines Hohlventils für den Gasaustausch, insbesondere für einen Verbrennungsmotor, anzugeben, bei welchem sowohl das zu bearbeitende Hohlventil während der Bearbeitung zuverlässig fixiert, als auch eine Führung der Kathode äußerst präzise möglich ist. Darüber hinaus kann ein Austausch eines fertig bearbeitenden Hohlventils durch ein noch nicht bearbeitetes Hohlventil vergleichsweise einfach erfolgen, wodurch sich eine besonders wirtschaftliche Herstellbarkeit ergibt. Die erfindungsgemäße Vorrichtung weist einen Ventilhalter auf, bestehend aus einer Ventilschaftzentrierung, einer Ventilaufnahme und einem Ventilkopfhalter, wobei die Ventilaufnahme an einem zu haltenden Ventilschaft und der Ventilkopfhalter an einen zu haltenden Ventilkopf angepasst sind. Der Ventilhalter ermöglicht dabei ein schwerkraftbedingtes Halten des zu bearbeitenden Hohlventils, da der Ventilkopfhalter oben angeordnet ist und somit ein einfaches von oben Einführen und Fixieren des zu bearbeitenden Hohlventils ermöglicht wird. Der Ventilhalter ist dabei über seine Ventilschaftzentrierung auf einem ersten Träger angeordnet, wogegen zumindest ein Kathodenhalter mit einer Kathode, die durch den ersten Träger über die Ventilschaftzentrierung in eine Bohrung des Hohlventils einführbar ist, auf einem zweiten, darunter angeordneten Träger befestigt ist. Darüber hinaus weist die erfindungsgemäße Vorrichtung noch zumindest eine, dem Ventilkopfhalter gegenüberliegende, Kontaktplatte auf. Das Bearbeiten des erfindungsgemäßen Hohlventils zur Herstellung des insbesondere im Ventilkopf vergrößerten Hohlraums erfolgt dabei wie folgt: Zunächst wird das zu bearbeitende Hohlventil kopfüber von oben in den Ventilhalter eingelegt, bis es mit seinem Ventilkopf (Ventilteller) am Ventilkopfhalter anliegt. Anschließend wird entweder der erste Träger gegen die Kontaktplatte oder aber die Kontaktplatte in Richtung des ersten Trägers verstellt, bis die Kontaktplatte in Kontakt mit dem im Ventilhalter gehaltenen Hohlventil(en) kommt. In dem sich daran anschließenden Verfahrensschritt kann entweder die Kontaktplatte weiter in Richtung des ersten Trägers gedrückt werden, wodurch sich zwar der Abstand zwischen der Kontaktplatte und dem ersten Träger nicht verändert, wohl aber der Abstand zwischen dem ersten und dem zweiten Träger. Das Reduzieren des Abstandes zwischen dem ersten und dem zweiten Träger wiederum bewirkt, dass die am zweiten Träger angeordnete Kathode durch den ersten Träger hindurch über die Ventilschaftzentrierung in die Bohrung des Hohlventils eingeführt wird. Ist die Kathode dabei soweit eingeführt, dass diese den Ventilkopf des zu bearbeitenden Hohlventils erreicht hat, wird zusätzlich ein Elektrolyt zugeführt und das elektrochemische Abtragen kann beginnen. Dabei ist die Kathode über eine Dichtung gegenüber der Ventilschaftzentrierung abgedichtet. Ist der gewünschte vergrößerte Hohlraum im Ventilkopf des herzustellenden Hohlventils hergestellt, wird beispielsweise wieder die Kontaktplatte zurückgezogen, wodurch ein Ausfahren der Kathode aus der Bohrung des Hohlventils und anschließend auch eine Kontaktunterbrechung zwischen der Kontaktplatte und dem Ventilkopf des bearbeiteten Hohlventils erfolgt. Anschließend kann das fertig bearbeitete Hohlventil einfach aus dem Ventilhalter entnommen werden.

Zweckmäßig ist die Kontaktplatte zumindest teilweise, aus einem elektrisch leitenden Material, insbesondere aus Edelstahl oder aus Kupfer, ausgebildet. Beide Ausführungsformen ermöglichen eine optimale elektrische Leitung zwischen dem zu bearbeitenden Hohlventil und der Kontaktplatte und sind darüber hinaus Korrosionsbeständig, woraus eine lange Lebensdauer resultiert.

Bei einer weiteren vorteilhaften Ausführungsform der erfindungsgemäßen Lösung ist der Ventilkopfhalter federnd und axial beweglich gegenüber der Ventilaufnahme gelagert. Hierdurch sind insbesondere ein Toleranzausgleich möglich, sowie eine spannungsarme Fixierung des zu bearbeitenden Hohlventils im Ventilhalter.

Bei einer vorteilhaften Weiterbildung der erfindungsgemäßen Lösung weist die Ventilschaftzentrierung eine Elektrolytzuführung und der Kathodenhalter eine Elektrolytabführung auf. Alternativ ist auch vorstellbar, dass die Ventilschaftzentrierung eine Elektrolytabführung und der Kathodenhalter eine Elektrolytzuführung aufweist. Dies stellt gleichwertige, jedoch konstruktiv unterschiedliche Ausführungsformen der Elektrolytzu- bzw. abführung dar. Um ein Austreten des Elektrolyten zuverlässig verhindern zu können, ist die Kathode über eine Dichtung gegenüber der Ventilschaftzentrierung abgedichtet. Hierdurch ist es möglich den Elektrolyten mit einem Druck von bis zu 15 bar zu beaufschlagen.

Sämtlichen Ausführungsformen ist dabei gemein, dass der Ventilhalter bzw. zumindest dessen Ventilkopfhalter und/oder der Kathodenhalter vergleichsweise einfach ausgetauscht werden können, wodurch die erfindungsgemäße Vorrichtung flexibel und einfach an unterschiedlichste zu bearbeitende Hohlventile anpassbar ist. Darüber hinaus ist selbstverständlich denkbar, dass mit der erfindungsgemäßen Vorrichtung nicht nur ein einziges Hohlventil, sondern mehrere Hohlventile gleichzeitig bearbeitet werden können, was insbesondere dazu beiträgt, die Herstellungskosten zu senken. Zudem ist es vorstellbar, das das Ventil nicht nur hängend in der Vorrichtung zu bearbeiten, sondern auch in einer Ventilaufnahme stehend oder liegend, besonders vorteilhaft ist aber die hier beschriebene hängende Aufnahme.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch,
- Fig. 1: eine Schnittdarstellung durch eine erfindungsgemäße Vorrichtung für die Herstellung zumindest eines Hohlventils,
- Fig. 2: eine Detaildarstellung aus Figur 1 im Bereich einer Ventilschaftzentrierung,
- Fig. 3a: eine erfindungsgemäße Vorrichtung mit einer verfahrbaren Kontaktplatte und einem verfahrbaren zweiten Träger, wobei der erste Träger und mit diesem die Ventilaufnahme fixiert sind,
- Fig. 3b: eine erfindungsgemäße Vorrichtung mit einer verfahrbaren Kontaktplatte und einem verfahrbaren ersten Träger, wobei der zweite Träger und mit diesem die Kathode fixiert sind,
- Fig. 3c: eine erfindungsgemäße Vorrichtung mit einem verfahrbaren ersten und zweiten Träger.

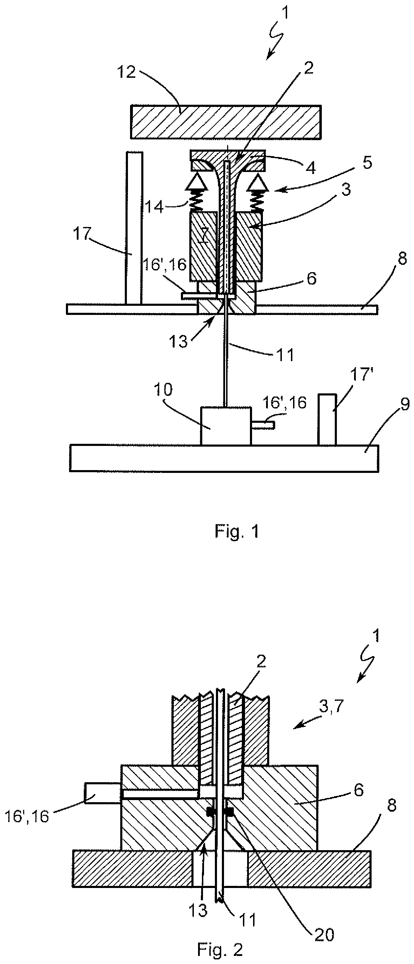

Entsprechend der Figur 1, weist eine erfindungsgemäße Vorrichtung 1 für die Herstellung zumindest eines Hohlventils 2 für den Gasaustausch, insbesondere für Verbrennungsmotoren, zumindest einen Ventilhalter 3, hier zwei Ventilhalter 3, auf. In dem Ventilhalter 3 wird das zu bearbeitende Hohlventil 2 kopfüber eingesetzt, bis es mit seinem Ventilkopf 4 in einem Ventilkopfhalter 5 aufliegt. Selbstverständlich ist dabei alternativ auch denkbar, dass das Hohlventil 2 in beliebiger Lage, insbesondere auch stehend oder liegend und nicht nur hängend bearbeitet werden kann. Der Ventilhalter 3 besteht dabei aus einer Ventilschaftzentrierung 6, einer Ventilaufnahme 7 und dem genannten Ventilkopfhalter 5, wobei die Ventilaufnahme 7 an einen zu haltenden Ventilschaft des Hohlventils 2 und der Ventilkopfhalter 5 an den zu haltenden Ventilkopf 4 des Hohlventils 2 angepasst sind. Der Ventilhalter 3 ist dabei über seine Ventilschaftzentrierung 6 auf einem ersten Träger 8 angeordnet. Darüber hinaus ist zumindest ein zweiter Träger 9 vorgesehen, auf welchem ein Kathodenhalter 10 mit einer Kathode 11 angeordnet ist, die durch den ersten Träger 8 über die Ventilschaftzentrierung 6 in eine Bohrung des Hohlventils 2 einführbar ist. Gegenüberliegend zum Ventilkopfhalter 5 weist die erfindungsgemäße Vorrichtung 1 zudem eine Kontaktplatte 12 auf, die zumindest teilweise, aus einem elektrisch leitenden Material, insbesondere aus Edelstahl oder aus Kupfer, ausgebildet und damit elektrisch gut leitend ist.

Betrachtet man die Figur 2, so kann man erkennen, dass die Kathode 11 die Ventilschaftzentrierung 6 und den ersten Träger 8 durchdringt und zugleich eine Fase 13 zum vereinfachten Einführen der Kathode 11 in die Bohrung des Hohlventils 2 besitzt. Der Ventilkopfhalter 5 ist federnd und axial beweglich gegenüber der Ventilaufnahme 7 gelagert, wodurch ein zumindest geringer Toleranzausgleich möglich ist und der Ventilkopfhalter 5 sogar für unterschiedliche Ventiltypen einsetzbar ist. Die federnde Lagerung des Ventilkopfhalters 5 gegenüber der Ventilaufnahme 7 wird dabei über eine Spiralfeder 14 bewirkt.

Mit der erfindungsgemäßen Vorrichtung 1 wird insbesondere ein Hohlraum im Bereich des Ventilkopfs 4 des Hohlventils 2 mittels elektrochemischem Abtragen vergrößert, um dort eine verbesserte Kühlung erreichen zu können. Neben der Kathode 11 ist hierfür auch ein Elektrolyt erforderlich, der beispielsweise durch eine hohl ausgebildete Kathode 11 zugeführt und über eine im Bereich der Ventilschaftzentrierung 6 angeordnete Elektrolytabführung 16 abgeführt werden kann. In diesem Fall weist also die Ventilschaftzentrierung 6 die Elektrolytabführung 16' und der Kathodenhalter 10 die Elektrolytzuführung 16 auf. Alternativ kann selbstverständlich auch die Ventilschaftzentrierung 6 eine Elektrolytzuführung 16 und der Kathodenhalter 10 eine Elektrolytabführung 16' aufweisen. Um ein Austreten des Elektrolyts zuverlässig verhindern zu können, ist die Kathode 11 über eine Dichtung 20 gegenüber der Ventilschaftzentrierung 6 abgedichtet.

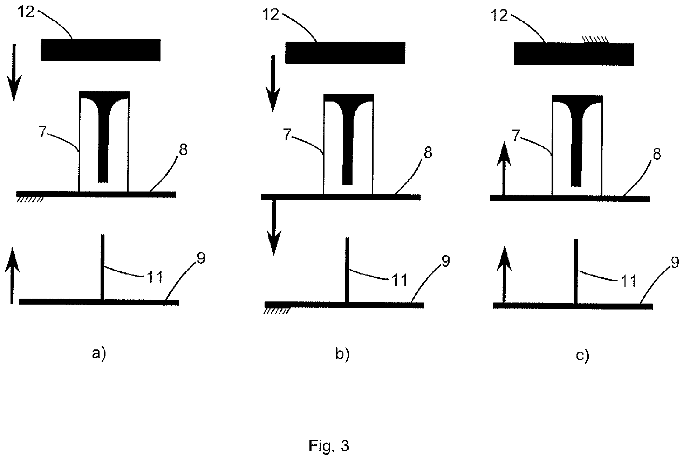

Üblicherweise ist bei der erfindungsgemäßen Vorrichtung 1 die Kontaktplatte 12 relativ zum ersten Träger 8 verfahrbar und zwar zumindest soweit, bis die Kontaktplatte 12 in elektrisch leitenden Kontakt mit dem Ventilkopf 4 des Hohlventils 2 gebracht ist (vgl. Fig. 3b). Wird die Kontaktplatte 12 weiter gegenüber dem ersten Träger 8 verfahren, so wird der Ventilkopfhalter 5 niedergedrückt und zwar so weit, bis die Kontaktplatte 12 an einem zwischen der Kontaktplatte 12 und dem ersten Träger 8 angeordneten Anschlag 17 anliegt (vergleiche Figur 1). Wird die Kontaktplatte 12 nun weiter nach unten gedrückt, so bewegt sich der erste Träger 8 nach unten auf den zweiten Träger 9 zu und bewirkt ein Einfahren der Kathode 11 durch die Ventilschaftzentrierung 6 und den ersten Träger 8 in die Bohrung des Hohlventils 2. Die Endstellung ist erreicht, wenn der erste Träger 8 auf dem Anschlag 17' (vgl. Fig. 1) aufsitzt oder eine vorgegebene Höhenposition erreicht ist. Die Betätigung kann beispielsweise durch eine Pneumatik oder eine Hydraulik oder auch NC gesteuert erfolgen. Der zweite Träger 9 ist fixiert. Ist die Kathode 11 bis zu einem vordefinierten Grad in die Bohrung des Hohlventils 2 eingefahren, kann das elektrochemische Abtragen erfolgen.

Fig. 3a zeigt eine erfindungsgemäße Vorrichtung 1 mit einer verfahrbaren Kontaktplatte 12 und einem verfahrbaren zweiten Träger 9, wobei der erste Träger 8 und mit diesem die Ventilaufnahme 7 fixiert sind. In diesem Fall wird somit die Kontaktplatte 12 relativ zum ersten Träger 8 nach unten verfahren und zwar zumindest soweit, bis die Kontaktplatte 12 in elektrisch leitenden Kontakt mit dem Ventilkopf 4 des Hohlventils 2 gebracht ist. Im Gegenzug wird der zweite Träger 9 mit der Kathode 11 von unten nach oben verstellt, bis die Kathode 11 durch die Ventilschaftzentrierung 6 in das Hohlventil 2 einfährt.

Fig. 3c wiederum zeigt eine Variante der erfindungsgemäßen Vorrichtung 1 mit einem verfahrbaren ersten und zweiten Träger, wogegen die Kontaktplatte 12 fixiert ist. Hierbei wird also der erste Träger 8 nach oben in Richtung der Kontaktplatte 12 verfahren, bis die Kontaktplatte 12 in elektrisch leitenden Kontakt mit dem Ventilkopf 4 des Hohlventils 2 gebracht ist. Wird der erste Träger weiter gegenüber der Kontaktplatte 12 verfahren, so wird der Ventilkopfhalter 5 niedergedrückt. Nun erfolgt ein nach oben Fahren des zweiten Trägers mit der Kathode 11, bis diese durch die Ventilschaftzentrierung 6 und den ersten Träger 8 in die Bohrung des Hohlventils 2 eingefahren ist. Ist die Kathode 11 bis zu einem vordefinierten Grad in die Bohrung des Hohlventils 2 eingefahren, kann das elektrochemische Abtragen erfolgen.

Generell nimmt die Ventilschaftzentrierung 6 den Ventilschaft des Hohlventils 2, insbesondere dessen Ventilschaftende, definiert auf und richtet dieses relativ zur Kathode 11 aus. Die Ventilschaftzentrierung 6 ist dabei als einfach auszutauschendes Wechselteil ausgelegt, ebenso wie beispielsweise die Ventilaufnahme 7 bzw. der Ventilkopfhalter 5, um einen schnellen Wechsel unterschiedlich zu bearbeitender Ventiltypen zu ermöglichen. Um stets ein berührungsfreies Einfahren der Kathode 11 in die Bohrung des Hohlventils 2 zu ermöglichen, ist ein Außendurchmesser der Kathode 11 kleiner als der Bohrungsdurchmesser plus Versatz der Bohrung (Toleranz).

Mit der erfindungsgemäßen Vorrichtung 1 lässt sich selbstverständlich nicht nur ein einziges Hohlventil 2 bearbeiten, sondern gleichzeitig mehrere Hohlventile 2 parallel, wodurch nicht nur ein qualitativ äußerst hochwertiges, sondern zudem auch wirtschaftliches Herstellen des Hohlventile 2 möglich ist.

## Patentansprüche

1. Vorrichtung (1) für die Herstellung zumindest eines Hohlventils (2) für den Gasaustausch, insbesondere für Verbrennungsmotoren, mit
- zumindest einem Ventilhalter (3), bestehend aus einer Ventilschaftzentrierung (6), einer Ventilaufnahme (7) und einem Ventilkopfhalter (5), wobei die Ventilaufnahme (7) an einen zu haltenden Ventilschaft und der Ventilkopfhalter (5) an einen zu haltenden Ventilkopf (4) angepasst sind,
- einem ersten Träger (8), auf welchem der Ventilhalter (3) über die Ventilschaftzentrierung (6) angeordnet ist,
- zumindest einem auf einem zweiten Träger (9) angeordneten Kathodenhalter (10) mit einer Kathode (11), die durch den ersten Träger (8) über die Ventilschaftzentrierung (6) in eine Bohrung des Hohlventils (2) einführbar ist,
- zumindest einer dem Ventilkopfhalter (5) gegenüberliegenden Kontaktplatte (12).

2. Vorrichtung nach Anspruch 1,
**dadurch gekennzeichnet,**
**dass** die Kathode (11) den ersten Träger (8) durchdringt.

3. Vorrichtung nach Anspruch 1 oder 2,
**dadurch gekennzeichnet,**
**dass** die Kathode (11) mit einer Dichtung (20) gegen die Ventilschaftzentrierung (6) abgedichtet ist.

4. Vorrichtung nach einem der Ansprüche 1 bis 3,
**dadurch gekennzeichnet,**
**dass** die Kontaktplatte (12) zumindest teilweise, aus einem elektrisch leitenden Material, insbesondere aus Edelstahl oder aus Kupfer, ausgebildet ist.

5. Vorrichtung nach einem der Ansprüche 1 bis 4,
**dadurch gekennzeichnet,**
**dass** der erste Träger (8) relativ beweglich gegenüber dem zweiten Träger (9) und/oder gegenüber der Kontaktplatte (12) gelagert ist.

6. Vorrichtung nach einem der Ansprüche 1 bis 4,
**dadurch gekennzeichnet,**
**dass** der erste Träger (8) fixiert ist und der zweite Träger (9) und die Kontaktplatte (12) relativ zum ersten Träger (8) gelagert sind.

7. Vorrichtung nach einem der Ansprüche 1 bis 6,
**dadurch gekennzeichnet,**
**dass** der Ventilkopfhalter (5) federnd und axial beweglich gegenüber der Ventilaufnahme (7) gelagert ist.

8. Vorrichtung nach einem der Ansprüche 1 bis 7,
**dadurch gekennzeichnet,**
**dass** die Kontaktplatte (12) relativ zum ersten Träger (8) verfahrbar und zwischen dem ersten Träger (8) und der Kontaktplatte (12) ein Anschlag (17) angeordnet ist.

9. Vorrichtung nach einem der Ansprüche 1 bis 8,
**dadurch gekennzeichnet,**
**dass** der erste Träger (8) relativ zum zweiten Träger (9) verfahrbar ist, sofern das zu bearbeitende Hohlventil (2) an der Kontaktplatte (12) anliegt.

10. Vorrichtung nach einem der Ansprüche 1 bis 9,
**dadurch gekennzeichnet,**
- **dass** die Ventilschaftzentrierung (6) eine Elektrolytzuführung (16) und der Kathodenhalter (10) eine Elektrolytabführung (16') aufweist, oder
- **dass** die Ventilschaftzentrierung (6) eine Elektrolytabführung (16') und der Kathodenhalter (10) eine Elektrolytzuführung (16) aufweist.

11. Vorrichtung nach einem der Ansprüche 1 bis 10,
**dadurch gekennzeichnet,**
**dass** das Hohlventil (2) hängend, stehend oder liegend in der Vorrichtung (1) angeordnet ist.

## Claims

1. Device (1) for manufacturing at least one hollow valve (2) for gas exchange, in particular for combustion engines having
- at least one valve holder (3), consisting of a valve stem centring (6), a valve seat (7) and a valve head holder (5) wherein the valve seat (7) is adapted to a valve stem to be held and the valve head holder (5) is adapted to a valve head (4) to be held,
- a first support (8) on which the valve holder (3) is arranged via the valve stem centring (6),
- at least one cathode holder (10), arranged on a second support (9), having a cathode (11) which can be inserted through the first support (8) via the valve stem centring (6) into a drill hole of the hollow valve (2),
- at least one contact plate (12) opposing the valve head holder (5).

2. Device according to claim 1,
**characterised in that**
the cathode (11) penetrates through the first support (8).

3. Device according to claim 1 or 2,
**characterised in that**
the cathode (11) is sealed off from the valve stem centring (6) with a seal (20).

4. Device according to any one of claims 1 to 3,
**characterised in that**
the contact plate (12) is configured at least partially in an electrically conductive material, in particular in stainless steel or copper.

5. Device according to any one of claims 1 to 4,
**characterised in that**
the first support (8) is mounted relatively moveable with respect to the second support (9) and/or with respect to the contact plate (12).

6. Device according to any one of claims 1 to 4,
**characterised in that**
the first support (8) is fixed and the second support (9) and the contact plate (12) are mounted relative to the first support (8).

7. Device according to any one of claims 1 to 6,
**characterised in that**
the valve head holder (5) is mounted resiliently and axially movable with respect to the valve seat (7).

8. Device according to any one of claims 1 to 7,
**characterised in that**
the contact plate (12) is arranged displaceable relative to the first support (8) and a stop (17) is arranged between the first support (8) and the contact plate (12).

9. Device according to any one of claims 1 to 8,
**characterised in that**
the first support (8) is displaceable relative to the second support (9), provided the hollow valve (2) to be processed rests on the contact plate (12).

10. Device according to any one of claims 1 to 9,
**characterised in that**
- the valve stem centring (6) has an electrolyte supply pipe (16) and the cathode holder (10) has an electrolyte discharge pipe (16'), or
- the valve stem centring (6) has an electrolyte discharge pipe (16') and cathode holder (10) has an electrolyte supply pipe (16).

11. Device according to any one of claims 1 to 10,
**characterised in that**
the hollow valve (2) is arranged hanging, standing or lying in the device (1).

## Revendications

1. Dispositif (1) pour la fabrication au moins d'une soupape creuse (2) pour l'échange gazeux, en particulier pour des moteurs à combustion interne, avec
- au moins un porte-soupape (3), constitué d'un centrage de tige de soupape (6), d'un logement de soupape (7) et d'un porte-tête de soupape (5), dans lequel le logement de soupape (7) est adapté à une tige de soupape à maintenir et le porte-tête de soupape (5), à une tête de soupape (4) à maintenir,
- un premier support (8), sur lequel est disposé le porte-soupape (3) par l'intermédiaire du centrage de tige de soupape (6),
- au moins un porte-cathode (10) disposé sur un deuxième support (9), avec une cathode (11), qui peut être introduite dans un alésage de la soupape creuse (2) par le premier support (8) par l'intermédiaire du centrage de tige de soupape (6),
- au moins une plaque de contact (12) faisant face au porte-tête de soupape (5).

2. Dispositif selon la revendication 1,
**caractérisé en ce**
**que** la cathode (11) traverse le premier support (8).

3. Dispositif selon la revendication 1 ou 2,
**caractérisé en ce**
**que** la cathode (11) est étanchéifiée par un joint d'étanchéité (20) par rapport au centrage de tige de soupape (6).

4. Dispositif selon l'une des revendications 1 à 3,
**caractérisé en ce**
**que** la plaque de contact (12) est réalisée au moins en partie à partir d'un matériau électroconducteur, en particulier d'acier inoxydable ou de cuivre.

5. Dispositif selon l'une des revendications 1 à 4,
**caractérisé en ce**
**que** le premier support (8) est monté de manière relativement mobile par rapport au deuxième support (9) et/ou par rapport à la plaque de contact (12).

6. Dispositif selon l'une des revendications 1 à 4,
**caractérisé en ce**
**que** le premier support (8) est fixé, et le deuxième support (9) et la plaque de contact (12) sont montés par rapport au premier support (8).

7. Dispositif selon l'une des revendications 1 à 6,
**caractérisé en ce**
**que** le porte-tête de soupape (5) est monté sur ressorts et de manière mobile axialement par rapport au logement de soupape (7).

8. Dispositif selon l'une des revendications 1 à 7,
**caractérisé en ce**
**que** la plaque de contact (12) peut être déplacée par rapport au premier support (8), et une butée (17) est disposée entre le premier support (8) et la plaque de contact (12).

9. Dispositif selon l'une des revendications 1 à 8,
**caractérisé en ce**
**que** le premier support (8) peut être déplacé par rapport au deuxième support (9) dans la mesure où la soupape creuse (2) à usiner repose au niveau de la plaque de contact (12).

10. Dispositif selon l'une des revendications 1 à 9,
**caractérisé en ce**
- **que** le centrage de tige de soupape (6) présente une arrivée d'électrolyte (16) et le porte-cathode (10), une évacuation d'électrolyte (16'), ou
- **que** le centrage de tige de soupape (6) présente une évacuation d'électrolyte (16') et le porte-cathode (10), une arrivée d'électrolyte (16).

11. Dispositif selon l'une des revendications 1 à 10,
**caractérisé en ce**
**que** la soupape creuse (2) est disposée de manière suspendue, en position debout ou couchée dans le dispositif (1).
